# EUROPEAN PATENT SPECIFICATION

(11) **EP 3 523 369 B1**
(45) Date of publication and mention of the grant of the patent: **21.01.2026**
(21) Application number: 17780118.0
(22) Date of filing: 09.10.2017
(51) Int. Cl.: C08L 23/04

(54) **RECYCLED POLYMER COMPOSITION**
RECYCELTE POLYMERZUSAMMENSETZUNG
COMPOSITIONS DE POLYMÈRES RECYCLÉS

(30) Priority: 10.10.2016 EP 16193099
(43) Date of publication of application: 14.08.2019
(73) Proprietor: Fraunhofer-Gesellschaft zur Förderung der angewandten Forschung e.V., 80686 München (DE)
(72) Inventor: HARJANTO, Anton, BSD City Tangerang Banten 15345 (ID); KNAPPICH, Fabian, 85354 Freising (DE); MAEURER, Andreas, Bernd, 85354 Freising (DE); NEUBAUER, Jochen, D-74074 Heilbronn (DE)
(74) Representative: Pfenning, Meinig & Partner mbB
(86) International application number: PCT/EP2017/075596
(87) International publication number: WO 2018/069205

(56) References cited:
- CHERIF LAHIMER MERIEM ET AL: "Characterization of plastic packaging additives: Food contact, stability and toxicity", ARABIAN JOURNAL OF CHEMISTRY, SAUDI CHEMICAL SOCIETY, SA, vol. 10, 24 July 2013 (2013-07-24), XP085070267, ISSN: 1878-5352, DOI: 10.1016/J.ARABJC.2013.07.022
- ACHILIAS D S ET AL: "Recycling of polymers from plastic packaging materials using the dissolution-reprecipitation technique", POLYMER BULLETIN, SPRINGER, BERLIN, DE, vol. 63, no. 3, 13 May 2009 (2009-05-13), pages 449 - 465, XP019738638, ISSN: 1436-2449, DOI: 10.1007/S00289-009-0104-5
- RANI MANVIRI ET AL: "Qualitative Analysis of Additives in Plastic Marine Debris and Its New Products", ARCHIVES OF ENVIRONMENTAL CONTAMINATION AND TOXICOLOGY, SPRINGER, NEW YORK,, NY, US, vol. 69, no. 3, 2 September 2015 (2015-09-02), pages 352 - 366, XP035547292, ISSN: 0090-4341, [retrieved on 20150902], DOI: 10.1007/S00244-015-0224-X

## Description

### Field of the invention

The invention relates to a recycled polyolefin material and its use in packaging.

### Background of the invention

Plastics and plastic-containing materials are extensively used in the production of packaged products that have an inherently short life-time, such as personal care products and home care products. The disposal or recycling of plastic-containing materials is, therefore, particularly important especially for environmental and economic reasons.

The production and use of recycled polymers are clearly desirable. The quality and usefulness of these recyclates depends on the source of the polymer and the process used to recycle them.

Land fill sourced recycling is particularly difficult due to the high level and diversity of contaminants affecting the source plastics. The unwanted contaminants can have a disruptive influence on processing and render the plastics unsuitable for many recycling processes. Unwanted components embedded in the plastic matrix can be, for example, foreign polymers used to assist in processing, manufacturing additives, pollutants, as well as substances transferred to the plastic from other waste landfill items. Contaminants can be toxic, for example, polycyclic aromatic hydrocarbons (PAHs), polyhalogenated aromatic hydrocarbons and heavy metals. Some contaminants such as dyes and oxidation agents cause interference of the optical properties of the recycled material.

The composition of landfill waste is thus too heterogeneous and unpredictable to recover high-quality and pure polyolefin.

As a result, heterogeneous polyolefin-rich waste streams are usually either recycled mechanically to lower-quality products, e.g. polyolefin recycling from Green dot collections of packaging waste in Germany, employed as substitute fuel or incinerated with or without energy recovery.

Commercial recycling process of polyolefin (PO)-containing waste typically uses a mechanical recycling, i.e. recompounding. In recompounding, the polyethylene (PE) and polypropylene (PP) waste are separated usually by automated near-infrared (NIR) spectroscopy the sorted material is compounded after the steps of grinding, floating, washing and drying.

The disadvantage of recompounding is that this approach is only applicable to mono-material. However, plastic packagings of today are usually made from many different materials. For flexible film packaging applications the majority of used plastics are mixtures by themselves. These mixtures are often multi-layers of compatible and incompatible polymers and cannot be re-compounded without expensive modifiers. These products exhibit worse mechanical properties compared to pure polymers and their compatible polymer blends.

Thus, with the increasing use of multilayer packaging the recycling of PO has become more difficult. Common separation techniques like spectroscopic or density sorting are not successful due to the complexity of these materials. Thus, mixed polymers from multi-layers are only recovered by downcycling and can only be used in low-value markets, e.g. thick plastic parts as substitute for cement bricks or profiles.

In order to mitigate some of the above problems, several processes have been developed to produce recyclates having improved purity.

In contrast to the mechanical recovery approaches, solvent-based recycling is selective for polyolefins and generates pure and high quality recovered polymers from mixed post-consumer waste.

Dissolution-based processes, and products threreof, are mentioned in a variety of patents for polyolefin-containing waste streams. It is known from US 4,031,039 (Mizumoto) and EP664314 B1 (Naumann 1990) to separate commingled post-consumer plastics with aromatic solvents (xylene, toluene) by selective dissolution. Alternatively, Naumann has proposed microdispersing the incompatible co-extracted polymer (US 4,666,961 and US 4,594,371). However, both approaches are only able to provide a limited product quality, with residual solvent traces negatively impacting the applicability of the recovered polymer.

Attempts to pre-extract foreign polymers or to use more selective solvents or solvent mixtures, still leave traces of co-dissolved foreign polymers in the product, for example, WO 2011/082802 A1. The foreign polymers thus produced are incompatible with the target polymer and result in undesired impurities, like stickies, crusts or gel particles, in the recovered polymer in particular during melt drying and extrusion with high temperature and friction.

Cherif Lahimer Meriem et al: "Characterization of plastic packaging additives: Food contact, stability and toxicity", Arabian Journal of Chemistry, Saudi Chemical Society, SA, vol. 10, 24 July 2013 disclose the use of toluene/methanol (1 :1) for polyolefins.

Achilias D S et al: "Recycling of polymers from plastic packaging materials using the dissolution-reprecipitation technique", Polymer Bulletin, vol. 63, no. 3, 13 May 2009 pages 449-465 teach the use of xylene/hexane or xylene/methanol for polyolefins.

Rani Manviri et al: "Qualitative Analysis of Additives in Plastic Marine Debris and Its New Products", Archives of Environmental Contamination and Toxicology, Springer, New York, vol. 69, no. 3, 2 September 2015, pages 352-366 teach products found in polyethylene and polypropylene waste.

However, despite these advances, there remains a need for further improved recycled materials, which can be derived from landfill sources. Such materials should be capable of being used as "drop-ins" for virgin plastics.

We have now found that a recycled polyolefin, produced from landfill sourced waste comprising low levels of impurities and some residual solvent, has properties similar to virgin material. The recyclate results from a method comprising the steps of mixing the polyolefin containing waste with a solvent having a Hansen parameter δ_{H} from 0 to 3; contacting this mixture with a filtration aid having a Hansen parameter δ_{H} > 10; and separating the polyolefin from the mixture.

### Summary of the invention

A first aspect of the present invention provides a recycled polyolefin comprising polyethylene and polypropylene, characterised in that it comprises:-
i) from 1 to 10,000 ppm of soluble impurities, wherein the foreign polymers are selected from polyesters, polyethers, polyvinylalcohols, polyamides, polyacrylates, polycarbonates, aromatic polymers, polystyrene, polyvinylchloride, and its blends or copolymers and mixtures thereof;
ii) from 0.001 to 5 wt % of insoluble impurities, which are particulates having a maximum dimension of from 20 microns to 1 mm, by total weight of the recycled polyolefin, wherein the particulates are selected from waste inorganic contaminants and mixtures of waste organic contaminants and waste inorganic contaminants;
iii) from 5 to 10,000 ppm of solvent having a Hansen parameter δ_{H} from 0 to 3, wherein the solvent is selected from the group consisting of cycloaliphatic, linear or branched hydrocarbons; and
iv) from 0.1 ppm to 10,000 ppm of a filtration aid having a Hansen parameter δ_{H} > 10, wherein the filtration aid is a fluid or a mixture of fluids selected from the group consisting of ethyleneglycol, propylenglycol, glycerol, aliphatic mono-/poly-hydroxy hydrocarbons, aliphatic ketons, aliphatic esters with 2 to 8 carbon atoms and/or water and/or mixtures thereof.

A second aspect of the invention provides a recycled polyolefin as defined in the first aspect, that is obtained from polyolefin containing waste by a method comprising the steps of:
a) mixing the polyolefin containing waste with a solvent having a Hansen parameter δ_{H} from 0 to 3;
b) contacting this mixture with a filtration aid having a Hansen parameter δ_{H} > 10; and
c) separating the polyolefin from the mixture.

It is preferred that the polyolefin is selected from the group consisting of PE, PP, LDPE, HDPE, LLDPE and mixtures of those.

A third aspect of the invention provides a container comprising the recycled polyolefin of the first aspect.

### Detailed description of the invention

The present invention relates to a recycled polyolefin. The polyolefin is preferably selected from the group consisting of polyethylene (PE), polypropylene (PP), low density polyethylene (LDPE), high density polyethylene (HDPE), linear low density polyethylene (LLDPE) and mixtures thereof, most preferably selected from polyethylene, polypropylene and mixtures thereof.

### The soluble impurities

The recycled polyolefin of the invention comprises from 1 to 10,000 ppm, preferably from 1 to 5,000 ppm, more preferably from 1 to 1,000 ppm, even more preferably from 1 to 200 ppm, still more preferably from 1 to 100 ppm and most preferably 1 to 50 ppm of soluble impurities.

Foreign polymers may arise from a wide variety of sources, namely plastic materials present in the waste source. Common examples include non-packaging plastics, structural plastics, multilayered plastics, paint, ink, dyes, printing polymers, varnishes and adhesives.

The foreign polymers are selected from polyesters, polyethers, polyvinylalcohols, polyamides, polyacrylates, polycarbonates, aromatic polymers, polystyrene, polyvinylchloride, and its blends or copolymers and mixtures thereof, preferably polystyrene, polyvinylchloride, and its blends or copolymers and mixtures thereof.

### The insoluble impurities

The recycled polyolefin of the invention comprises from 0.001 to 5, preferably 0.005 to 2 wt %, most preferably 0.01 to 1 wt % of insoluble impurities, which are particulates having a maximum dimension of from 20 microns to 1 mm, preferably from 20 to 150 mm, by total weight of the recycled polyolefin.

The particulates are selected from waste organic contaminants, waste inorganic contaminants and mixtures thereof.

Preferably, the waste organic contaminants and waste inorganic contaminants are selected from glass, fillers, flame retardants, papers, colorants, printing inks, whiteners (such as titanium dioxide), bonding agents, coatings, inert contaminants, foams, adhesives, metals, heavy metals, volatile organic substances, aromatic substances, halogenated aromatic substances, halogenated hydrocarbons, biologically degradable dirt, wood, dust, soil, rubber, textiles and mixtures thereof.

### The solvent

The recycled polyolefin of the invention comprises from 5 to 10,000 ppm, preferably from 10 to 5,000 ppm, more preferably from 30 to 3,000 ppm of solvent having a Hansen parameter δ_{H} from 0 to 3.

The solvent is selected from the group consisting of aliphatic compounds, preferably cycloaliphatic, linear or branched hydrocarbons, more preferably cycloaliphatic, linear or branched hydrocarbons with 5 to 18 carbon atoms and mixtures thereof.

### The filtration aid

The recycled polyolefin of the invention comprises from 0.1 ppm to 10,000 ppm, preferably from 0.5 to 5,000 ppm, more preferably from 1 to 2,000 ppm of a filtration aid having a Hansen parameter δ_{H} > 10.

Preferably, the filtration aid is a fluid or a mixture of fluids with a Hansen-parameter δ_{H} from 15 to 38, preferably from 25 to 35, more preferably a fluid or a mixture of fluids with a Hansen-parameter δ_{H} from 20 to 35 that is immiscible with the solvent, in particular a fluid selected from the group consisting of ethylenglycol, propylenglycol, glycerol, aliphatic mono-/poly-hydroxy hydrocarbons, aliphatic ketons, aliphatic esters with 2 to 8 carbon atoms and/or water and/or mixtures thereof.

### Method of preparation of the recyclate

The recycled polyolefin of the invention is preferably obtained from polyolefin containing waste by a method comprising the steps of:
d) mixing the polyolefin containing waste with a solvent having a Hansen parameter δ_{H} from 0 to 3;
e) contacting this mixture with a filtration aid having a Hansen parameter δ_{H} > 10; and
f) separating the polyolefin from the mixture.

It is preferred that the polyolefin is selected from the group consisting of PE, PP, LDPE, HDPE, LLDPE and mixtures of those.

In a preferred embodiment the solvent is selected from the group consisting of aliphatic compounds, preferably cycloaliphatic, linear or branched hydrocarbons, more preferably cycloaliphatic, linear or branched hydrocarbons with 5 to 18 carbon atoms and mixtures of those.

It is further preferred that the filtration aid is a fluid or a mixture of fluids with a Hansen-parameter δ_{H} from 15 to 38, preferably from 25 to 35, more preferably a fluid or a mixture of fluids with a Hansen-parameter δ_{H} from 20 to 35 that is immiscible with the solvent, in particular a fluid selected from the group consisting of ethylenglycol, propylenglycol, glycerol, aliphatic mono-/poly-hydroxy hydrocarbons, aliphatic ketons, aliphatic esters with 2 to 8 carbon atoms and/or water and/or mixtures of those.

Preferably, the polyolefin containing waste is selected from the group consisting of DSD waste, industrial waste, post-consumer waste, household-waste, bulky waste, packaging waste, rigid plastic waste and mixtures thereof and comprises or consists of multilayered plastic material and contaminant, wherein the multilayered plastic material contains at least one layer with at least 90 wt.-% of a polyolefin and at least another layer with at least 90 wt.-% of another polymer or polymer blend and/or at least another layer comprising metal and/or paper and/or any other coating material.

In a preferred embodiment the other polymer or polymer blend is selected from the group consisting of polyesters, polyethers, polyvinylalcohols, polyamides, polyacrylates, polycarbonates, aromatic polymers, preferably polystyrene, polyvinylchloride, and its blends or copolymers.

The contaminant is preferably selected from the group consisting of glass, fillers, flame retardants, papers, colorants, printing inks, whiteners (such as titanium dioxide; see below; example A), bonding agents (see below; example C), coatings, inert contaminants, foams, adhesives, metals, heavy metals, volatile organic substances, aromatic substances, halogenated aromatic substances, halogenated hydrocarbons, biologically degradable dirt, wood and its mixtures.

A mixture of step a) comprises preferably from 5 to 40, more preferably 5 to 15 wt.-% polymer.

It is preferred that a temperature of 75 to 170°C, preferably a temperature of 90 to 160°C, is applied in steps a) to b). The temperature is selected carefully not to have a sudden evaporation of water but to achieve preferably low viscosities in order to keep the process safe, technically as simple as possible and adaptable to variations in polyolefin content.

It is preferred that a temperature of 25 to 260°C is applied in step c).

Preferably, the mixture of step a) comprises from 5 to 40 wt.-% polymer the contacting time with the filtration aid in step b) is at least 0.5 min, preferably from 0.5 to 180 min, more preferably from 1 to 100 min, in particular 5 to 60 min. The contact time is adaptable to variations in polyolefin content, degree of contamination, operation mode (continuous or batch wise) and service life of optional downstream police- and/or fine-filter unit in order to optimize the maintenance work (reduced downtime and/or manual handling) and to maximize the process efficiency.

It is preferred that the volume of the filtration aid is from 0.5 to 50 wt.-%, more preferably from 2 to 25 wt.-% related to the mixture coming from step a). Furthermore, apart from the purification ability, the high conductivity of the filtration aid reduces the safety risk of the process.

It is preferred that the mixture is subjected to a separation process prior to step c), preferably a multi-step separation process, more preferably selected from the group consisting of a filtration process, in particular a filtration process using a sieve or a gap-filter with gaps from 10 to 5000 µm, a sedimentation and a decantation process and/or combinations thereof.

Following a possible additivation, the separation in step c) is preferably performed by evaporation of the solvent and/or by precipitation and mechanical separation of the polyolefin.

In a preferred embodiment the separated polyolefin is directly fed into an extruder and processed to a polyolefin granulate compound or masterbatch or film or the polyolefin is dried in a drying process and cooled to room temperature.

### The container

The invention provides a container comprising the recycled polyolefin of the invention.

The container may be a bottle, sachet or bag.

Preferably, the container is flexible.

The container of the present invention is preferably suitable for containing fast moving consumer goods products, preferably for use in home and personal care applications. Preferred products which may be contained include liquids and solids, such as liquid formulations, gels, lotions, powders, pastes and pellets. For example personal wash products such as hair treatment compositions, shampoos and hair conditioners; laundry detergents such as powder and liquid washing products; and household detergents such as dishwash products, soaps and cleaning fluids.

The recycled polyolefin of the invention may be blended with virgin polyolefin to form a polyolefin blend. Preferably, the amount of recycled polyolefin is from 10 to 80 wt % of recylcate, preferably from 40 to 80 wt %, most preferably from 50 to 75 wt %, by weight of the total polyolefin blend. The container of the invention is preferably made from the polyolefin blend.

### Examples

Films from different sources were prepared as follows:-
1. Prior art: DSD-Sorting (green dot), prepared by the following method:-
   a) Fractionation - Flexibles fraction with a PO-content >95%
   b) Washing step
   c) Density separation
   d) Agglomeration
   e) Compounding with melt filtration (150µ)
2. Coarse filtration without liquid filtration aid
3. Coarse filtration with a liquid filtration aid
4. Coarse filtration with a liquid filtration aid and fine filtration. (In accordance with the invention.)
5. Virgin polyolefin material

The sample films had thicknesses of 100-150 microns. The films had different levels of impurities.

The samples were prepared for visual comparison as follows:
Film samples were applied to paper with lorem ipsum text (using a page format DIN A4, font type calibri, font size 11).

The samples were then scanned using a constant resolution of 600 dpi (4960*7015 px), and a section frame size of 326*434 pixels.

The results are shown in Figure 1.

**Figure 1:** Shows the films having different purities, as prepared from the methods detailed above:-
1. Re-granulated material. (Representative of the prior art.)
2. Coarse filtration without liquid filtration aid
3. Coarse filtration with a liquid filtration aid
4. Coarse filtration with a liquid filtration aid and fine filtration. (In accordance with the invention.)
5. Virgin polyolefin material

It can be seen that the film in accordance with the invention (4) comprised fewer impurities than the comparative films (1 -3) and was visually very close to the virgin material in terms of quality of film.

## Claims

1. A homogeneous recycled polyolefin comprising polyethylene and polypropylene, comprising:-
i) from 1to 10,000 ppm of soluble impurities selected from foreign polymers and mixtures thereof, wherein the foreign polymers are selected from polyesters, polyethers, polyvinylalcohols, polyamides, polyacrylates, polycarbonates, aromatic polymers, polystyrene, polyvinylchloride, and its blends or copolymers and mixtures thereof;
ii) from 0.001 to 5 wt % of insoluble impurities, which are particulates having a maximum dimension of from 20 microns to 1 mm, by total weight of the recycled polyolefin wherein the particulates are selected from waste inorganic contaminants and mixtures of waste organic contaminants and waste inorganic contaminants;
iii) from 5 to 10,000 ppm of solvent having a Hansen parameter δ_{H} from 0 to 3 wherein the solvent is selected from the group consisting of cycloaliphatic, linear or branched hydrocarbons; and
iv) from 0.1 ppm to 10,000 ppm of a filtration aid having a Hansen parameter δ_{H} of greater than 10, wherein the filtration aid is a fluid or a mixture of fluids selected from the group consisting of ethyleneglycol, propylenglycol, glycerol, aliphatic mono-/poly-hydroxy hydrocarbons, aliphatic ketons, aliphatic esters with 2 to 8 carbon atoms and/or water and/or mixtures thereof;
wherein the homogenous recycled polyolefin is obtained from a method comprising the steps of:
a) mixing polyolefin-containing waste with a solvent having a Hansen parameter δ_{H} from 0 to 3;
b) contacting this mixture with a filtration aid having a Hansen parameter δ_{H} of greater than 10 and
c) separating the polyolefin from the mixture;

2. A recycled polyolefin as claimed in claim 1, which contains from 1 to 200 ppm of soluble impurities.

3. A recycled polyolefin as claimed in any of the preceding claims, wherein the waste organic contaminants and waste inorganic contaminants are selected from glass, fillers, flame retardants, papers, colorants, printing inks, whiteners {such as titanium dioxide), bonding agents, coatings, inert contaminants, foams, adhesives, metals, heavy metals, volatile organic substances, aromatic substances, halogenated aromatic substances, halogenated hydrocarbons, biologically degradable dirt, wood, dust, soil, rubber, textiles and mixtures thereof.

4. A recycled polyolefln as claimed in any preceding claim, wherein the solvent is selected from the group consisting of cycloaliphatic, linear or branched hydrocarbons with 5 to 18 carbon atoms and mixtures thereof.

5. A recycled polyolefin as claimed in any one of the preceding claims, wherein the mixture of step a) comprises preferably from 5 to 40, more preferably 5 to 15wt.% polymer.

6. A recycled polyolefin as claimed in any one of the preceding claims, wherein steps a) and b) are carried out at a temperature of 75 to 170"C, preferably a temperature of 90 to 160"C and a temperature of 25 to 260"C is applied in step c).

7. A recycled polyolefin as claimed in any one of the preceding claims, wherein the mixture of step a) comprises from 5 to 40 wt.- % polymer and the contacting time with the filtration aid in step b) is at least 0.5 min, preferably from 0.5 to 180 min.

8. A recycled polyolefin as claimed in any one of the preceding claims wherein the volume of the filtration aid is from 0.5 to 50 wt.-%, by weight of the mixture arising from step a).

9. A recycled polyolefin as claimed in any one of the preceding claims wherein the mixture is subjected to a separation process prior to step c), preferably a multi-step separation process, more preferably selected from the group consisting of a filtration process, in particular a filtration process using a sieve or a gap-filter with gaps from 10 to 5000 µm, a sedimentation and a decantation process and/or combinations thereof.

10. A recycled polyolefin as claimed in any one of the preceding claims wherein following a possible additivation, the separation in step c) is performed by evaporation of the solvent and/or by precipitation and mechanical separation of the polyolefin.

11. A recycled polyolefin as claimed in any one of the preceding claims wherein the separated polyolefin is directly fed into an extruder and processed to a polyolefin granulate compound or masterbatch or film or the polyolefin is dried in a drying process and cooled to room temperature.

12. Method for the preparation of the recycled polyolefine as defined in any of the preceding claims comprising the steps of:-
a) mixing polyolefin-containing waste with the solvent having a Hansen parameter δ_{H} from O to 3;
b) contacting this mixture with the filtration aid having a Hansen parameter δ_{H} of greater than 10 and
c) separating the polyolefin from the mixture.

## Patentansprüche

1. Homogenes, recyceltes Polyolefin, das Polyethylen und Polypropylen enthält, enthaltend:
i. 1 bis 10.000 ppm löslicher Verunreinigungen, ausgewählt aus Fremdpolymeren und Mischungen davon, wobei die Fremdpolymere ausgewählt sind aus Polyestern, Polyethern, Polyvinylalkoholen, Polyamiden, Polyacrylaten, Polycarbonaten, aromatischen Polymeren, Polystyrol, Polyvinylchlorid und deren Mischungen oder Copolymeren und Mischungen davon;
ii. 0,001 bis 5 Gew.-% unlöslicher Verunreinigungen, bei denen es sich um Partikel mit einer maximalen Größe von 20 µm bis 1 mm handelt, bezogen auf das Gesamtgewicht des recycelten Polyolefins, wobei die Partikel ausgewählt sind aus anorganischen Kontaminanten aus Abfällen und Mischungen von organischen Kontaminanten aus Abfällen und anorganischen Kontaminanten aus Abfällen;
iii. 5 bis 10.000 ppm eines Lösungsmittels mit einem Hansen-Parameter δ_{H} von 0 bis 3, wobei das Lösungsmittel ausgewählt ist aus der Gruppe bestehend aus cycloaliphatischen, linearen oder verzweigten Kohlenwasserstoffen; und
iv. 0,1 ppm bis 10.000 ppm eines Filtrationshilfsmittels mit einem Hansen-Parameter δ_{H} von mehr als 10, wobei es sich bei dem Filtrationshilfsmittel um ein Fluid oder ein Gemisch aus Fluiden handelt, ausgewählt aus der Gruppe bestehend aus Ethylenglykol, Propylenglykol, Glycerin, aliphatischen Mono- /Polyhydroxy-Kohlenwasserstoffen, aliphatischen Ketonen, aliphatischen Estern mit 2 bis 8 Kohlenstoffatomen und/oder Wasser und/oder Mischungen davon;
wobei das homogene recycelte Polyolefin durch ein Verfahren erhalten wird, umfassend die Schritte:
a) Mischen von polyolefinhaltigen Abfällen mit einem Lösungsmittel mit einem Hansen-Parameter δ_{H} von 0 bis 3;
b) In Kontakt Bringen dieser Mischung mit einem Filtrationshilfsmittel mit einem Hansen-Parameter δ_{H} von mehr als 10 und
c) Trennen des Polyolefins aus dem Gemisch.

2. Recyceltes Polyolefin nach Anspruch 1, das zwischen 1 und 200 ppm löslicher Verunreinigungen enthält.

3. Recyceltes Polyolefin nach einem der vorangehenden Ansprüche, wobei die organischen Kontaminanten aus Abfällen und die anorganischen Kontaminanten aus Abfällen ausgewählt sind aus Glas, Füllstoffen, Flammschutzmitteln, Papieren, Farbstoffen, Druckfarben, Weißmachern (wie Titandioxid), Bindemitteln, Beschichtungen, inerten Kontaminanten, Schaumstoffen, Klebstoffen, Metallen, Schwermetallen, flüchtigen organischen Substanzen, aromatischen Substanzen, halogenierten aromatischen Substanzen, halogenierten Kohlenwasserstoffen, biologisch abbaubarem Schmutz, Holz, Staub, Erde, Gummi, Textilien und Mischungen davon.

4. Recyceltes Polyolefin nach einem der vorangehenden Ansprüche, wobei das Lösungsmittel ausgewählt ist aus der Gruppe bestehend aus cycloaliphatischen, linearen oder verzweigten Kohlenwasserstoffen mit 5 bis 18 Kohlenstoffatomen und Mischungen davon.

5. Recyceltes Polyolefin nach einem der vorangehenden Ansprüche, wobei die Mischung aus Schritt a) vorzugsweise 5 bis 40, noch bevorzugter 5 bis 15 Gew.-% Polymer enthält.

6. Recyceltes Polyolefin nach einem der vorangehenden Ansprüche, wobei die Schritte a) und b) bei einer Temperatur von 75 bis 170°C, vorzugsweise bei einer Temperatur von 90 bis 160 °C, durchgeführt werden und in Schritt c) eine Temperatur von 25 bis 260 °C angewendet wird.

7. Recyceltes Polyolefin nach einem der vorangehenden Ansprüche, wobei die Mischung aus Schritt a) 5 bis 40 Gew.-% Polymer enthält und die Kontaktzeit mit dem Filtrationshilfsmittel in Schritt b) wenigstens 0,5 min, vorzugsweise 0,5 bis 180 min beträgt.

8. Recyceltes Polyolefin nach einem der vorangehenden Ansprüche, wobei das Volumen des Filtrationshilfsmittels 0,5 bis 50 Gew.-%, bezogen auf das Gewicht der Mischung aus Schritt a), ist.

9. Recyceltes Polyolefin nach einem der vorangehenden Ansprüche, wobei die Mischung vor Schritt c) einem Trennverfahren unterzogen wird, vorzugsweise einem mehrstufigen Trennverfahren, noch bevorzugter ausgewählt aus der Gruppe bestehend aus einem Filtrationsverfahren, insbesondere einem Filtrationsverfahren unter Verwendung eines Siebs oder eines Spaltfilters mit Spalten von 10 bis 5000 µm, einem Sedimentations- und einem Dekantationsverfahren und/oder Kombinationen davon.

10. Recyceltes Polyolefin nach einem der vorangehenden Ansprüche, wobei nach einer möglichen Additivierung die Trennung in Schritt c) durch Verdampfen des Lösungsmittels und/oder durch Ausfällen und mechanisches Trennen des Polyolefins durchgeführt wird.

11. Recyceltes Polyolefin nach einem der vorangehenden Ansprüche, wobei das getrennte Polyolefin direkt in einen Extruder eingespeist und zu einem Polyolefin-Granulat-Compound oder Masterbatch oder einer Folie verarbeitet wird oder das Polyolefin in einem Trocknungsprozess getrocknet und auf Raumtemperatur abgekühlt wird.

12. Verfahren zur Herstellung des recycelten Polyolefins, wie in einem der vorangehenden Ansprüche definiert, umfassend die Schritte:
a) Mischen von polyolefinhaltigen Abfällen mit dem Lösungsmittel mit einem Hansen-Parameter δ_{H} von 0 bis 3;
b) In Kontakt Bringen dieser Mischung mit dem Filtrationshilfsmittel mit einem Hansen-Parameter δ_{H} von mehr als 10 und
c) Trennen des Polyolefins aus dem Gemisch.

## Revendications

1. Polyoléfine recyclée homogène comprenant du polyéthylène et du polypropylène, comprenant :
i. de 1 à 10000 ppm d'impuretés solubles choisies parmi des polymères étrangers et des mélanges de ceux-ci, dans laquelle les polymères étrangers sont choisis parmi les polyesters, les polyéthers, les alcools polyvinyliques, les polyamides, les polyacrylates, les polycarbonates, les polymères aromatiques, le polystyrène, le polychlorure de vinyle et ses mélanges ou copolymères et les mélanges de ceux-ci ;
ii. de 0,001 à 5 % en poids d'impuretés insolubles, qui sont des particules ayant une dimension maximale de 20 microns à 1 mm, par rapport au poids total de la polyoléfine recyclée, dans laquelle les particules sont choisies parmi les déchets de contaminants inorganiques et les mélanges de déchets de contaminants organiques et de déchets de contaminants inorganiques ;
iii. de 5 à 10000 ppm de solvant ayant un paramètre de Hansen δ_{H} de 0 à 3, dans laquelle le solvant est choisi dans le groupe constitué par les hydrocarbures cycloaliphatiques, linéaires ou ramifiés ; et
iv. de 0,1 ppm à 10000 ppm d'un adjuvant de filtration ayant un paramètre de Hansen δ_{H} supérieur à 10, dans laquelle l'adjuvant de filtration est un fluide ou un mélange de fluides choisis dans le groupe constitué par l'éthylèneglycol, le propyléneglycol, le glycérol, les hydrocarbures aliphatiques mono-/poly-hydroxy, les cétones aliphatiques, les esters aliphatiques ayant de 2 à 8 atomes de carbone et/ou l'eau et/ou les mélanges de ceux-ci ;
dans laquelle la polyoléfine recyclée homogène est obtenue à partir d'un procédé comprenant les étapes de :
a) mélange de déchets contenant une polyoléfine avec un solvant ayant un paramètre de Hansen δ_{H} de 0 à 3 ;
b) mise en contact de ce mélange avec un adjuvant de filtration ayant un paramètre de Hansen δ_{H} supérieur à 10 et
c) séparation de la polyoléfine du mélange.

2. Polyoléfine recyclée selon la revendication 1, qui contient de 1 à 200 ppm d'impuretés solubles.

3. Polyoléfine recyclée selon l'une quelconque des revendications précédentes, dans laquelle les déchets de contaminants organiques et les déchets de contaminants inorganiques sont choisis parmi le verre, les charges, les retardateurs de flamme, les papiers, les colorants, les encres d'imprimerie, les blanchisseurs (tels que le dioxyde de titane), les agents de liaison, les revêtements, les contaminants inertes, les mousses, les adhésifs, les métaux, les métaux lourds, les substances organiques volatiles, les substances aromatiques, les substances aromatiques halogénées, les hydrocarbures halogénés, les saletés biologiquement dégradables, le bois, la poussière, le sol, le caoutchouc, les textiles et les mélanges de ceux-ci.

4. Polyoléfine recyclée selon l'une quelconque des revendications précédentes, dans laquelle le solvant est choisi dans le groupe constitué par les hydrocarbures cycloaliphatiques, linéaires ou ramifiés, ayant de 5 à 18 atomes de carbone, et les mélanges de ceux-ci.

5. Polyoléfine recyclée selon l'une quelconque des revendications précédentes, dans laquelle le mélange de l'étape a) comprend de préférence de 5 à 40, plus préférentiellement de 5 à 15 % en poids de polymère.

6. Polyoléfine recyclée selon l'une quelconque des revendications précédentes, dans laquelle les étapes a) et b) sont effectuées à une température de 75 à 170 °C, de préférence à une température de 90 à 160 °C, et une température de 25 à 260 °C est appliquée à l'étape c).

7. Polyoléfine recyclée selon l'une quelconque des revendications précédentes, dans laquelle le mélange de l'étape a) comprend de 5 à 40 % en poids de polymère et le temps de contact avec l'adjuvant de filtration à l'étape b) est d'au moins 0,5 min, de préférence de 0,5 à 180 min.

8. Polyoléfine recyclée selon l'une quelconque des revendications précédentes, dans laquelle le volume de l'adjuvant de filtration est de 0,5 à 50 % en poids du mélange résultant de l'étape a).

9. Polyoléfine recyclée selon l'une quelconque des revendications précédentes, dans laquelle le mélange est soumis à un processus de séparation avant l'étape c), de préférence un processus de séparation en plusieurs étapes, plus préférentiellement choisi dans le groupe constitué par un processus de filtration, en particulier un processus de filtration utilisant un tamis ou un filtre à fente avec des fentes de 10 à 5000 µm, un processus de sédimentation et de décantation et/ou des combinaisons de ceux-ci.

10. Polyoléfine recyclée selon l'une quelconque des revendications précédentes, dans laquelle, après une éventuelle incorporation d'additif, la séparation à l'étape c) est réalisée par évaporation du solvant et/ou par précipitation et séparation mécanique de la polyoléfine.

11. Polyoléfine recyclée selon l'une quelconque des revendications précédentes, dans laquelle la polyoléfine séparée est directement introduite dans une extrudeuse et transformée en composé de granulés, mélanges maîtres ou films de polyoléfine, ou la polyoléfine est séchée dans un processus de séchage et refroidie à température ambiante.

12. Procédé de préparation de la polyoléfine recyclée selon l'une quelconque des revendications précédentes comprenant les étapes de :
a) mélange de déchets contenant une polyoléfine avec le solvant ayant un paramètre de Hansen δ_{H} de 0 à 3 ;
b) mise en contact de ce mélange avec l'adjuvant de filtration ayant un paramètre de Hansen δ_{H} supérieur à 10 et
c) séparation de la polyoléfine du mélange.
